# FASCICULE DE BREVET EUROPEEN

(11) **EP 0 466 553 B1**
(45) Date de publication et mention de la délivrance du brevet: **28.09.1994**
(21) Numéro de dépôt: 91401796.7
(22) Date de dépôt: 01.07.1991
(51) Int. Cl.: G21C 19/307

(54) **Embout inférieur d'un assemblage combustible pour réacteur nucléaire comportant une plaque adaptatrice et une plaque de filtration accolée à la plaque adaptatrice**
Fussstück für Kernreaktorbrennstabbündel mit einer Adapterplatte und einer daran befestigten Filterplatte
Nuclear reactor fuel assembly bottom nozzle comprising an adapter plate and thereto fixed filterplate

(30) Priorité: 11.07.1990 FR 9008835
(43) Date de publication de la demande: 15.01.1992
(73) Titulaire: FRAMATOME, 92400 Courbevoie (FR); COGEMA, F-78141 Velizy Villacoublay (FR)
(72) Inventeur: Verdier, Michel, F-69100 Villeurbanne (FR); Mortgat, Régis, F-69279 Couzon-au-Mont d'Or (FR)
(74) Mandataire: Bouget, Lucien

(56) Documents cités:
- EP-A- 0 311 037
- FR-A- 2 500 947
- FR-A- 2 574 579
- US-A- 4 684 496

## Description

L'invention concerne un embout inférieur d'un assemblage combustible pour réacteur nucléaire et en particulier pour réacteur nucléaire à eau sous pression, comportant une plaque adaptatrice de forme carrée traversée par des ouvertures de passage d'eau et un moyen de filtration constitué par une plaque percée de trous de faibles dimensions accolée à la plaque adaptatrice.

Les réacteurs nucléaires à eau sous pression comportent un coeur constitué par des assemblages prismatiques disposés côte à côte en position verticale. Les assemblages comportent une ossature fermée par des embouts dans laquelle sont disposés les crayons combustibles qui sont maintenus par des grilles-entretoises espacées les unes des autres suivant la direction longitudinale de l'assemblage.

Les grilles-entretoises constituent un réseau régulier dans lequel certains emplacements sont occupés par des tubes-guides destinés à recevoir les crayons absorbants de grappes de contrôle assurant le pilotage de la puissance dégagée par le coeur du réacteur nucléaire. Une partie au moins des tubes-guides sont reliés aux deux embouts de l'assemblage par leurs parties d'extrémité et assurent la jonction entre les composants de l'ossature et la rigidité de cette ossature.

L'un des embouts des assemblages, appelé embout inférieur, vient reposer sur la plaque inférieure de coeur qui est percée de trous au niveau de chacun des assemblages pour permettre le passage de l'eau de refroidissement du réacteur à travers le coeur dans la direction verticale et de bas en haut.

Le fluide de refroidissement des crayons combustibles traverse la plaque adaptatrice de l'embout inférieur par des ouvertures appelées passages d'eau. Des débris qui peuvent être présents dans le circuit primaire du réacteur sont susceptibles d'être entraînés par l'eau sous pression en circulation et dans le cas où leur taille est faible (par exemple inférieure à 10 mm) ces débris peuvent passer au travers de la plaque adaptatrice de l'embout inférieur dont les passages d'eau ont une section importante. Ces débris peuvent venir se coincer entre les crayons combustibles et les cellules de la première grille, c'est-à-dire de la grille-entretoise maintenant les crayons suivant un réseau régulier disposée le plus bas dans l'assemblage. Ces débris soumis aux sollicitations hydrauliques axiales et transversales qui sont importantes dans cette sone peuvent user le gainage du crayon combustible. Il risque d'en résulter une perte d'étanchéité de ce gainage ainsi qu'une augmentation du taux d'activité du circuit primaire du réacteur.

On a donc proposé des dispositifs permettant de filtrer le fluide de refroidissement, pendant le fonctionnement du réacteur.

Des éléments filtrants sont associés aux assemblages combustibles et généralement disposés dans leur embout inférieur. Les éléments filtrants fixés dans les embouts inférieurs des assemblages combustibles sont généralement constitués par des structures en tôle ou en fils métalliques qui permettent d'arrêter les débris dont la taille est inférieure à la plus grande dimension de la section de passage entre un crayon combustible et une cellule de grille.

De tels éléments filtrants sont décrits par exemple dans les documents US-A-4.664.880, US-A-4.684.496 et EP-A-0.196.611.

De tels dispositifs peuvent être complexes et introduisent une perte de charge relativement importante dans la circulation du fluide de refroidissement à travers l'assemblage combustible.

En outre, ces dispositifs placés dans l'embout inférieur de l'assemblage peuvent être encombrants et gênants lors des opérations de chargement et de déchargement d'assemblages du coeur et lors du démontage et du remontage des liaisons des tubes-guides et de l'embout inférieur.

On a donc proposé, dans la demande de brevet EP-A-0 392 919, qui fait partie de l'état de la technique visé à l'article 54(3) CBE, déposée par les Sociétés FRAMATOME et COGEMA, un embout inférieur pour assemblage combustible comportant un dispositif de retenue de particules contenues dans le fluide de refroidissement du réacteur constitué par une plaque de filtration percée de trous fixée contre la face inférieure de la plaque adaptatrice, sur une partie substantielle de sa surface.

La plaque adaptatrice d'un tel embout comporte généralement des ouvertures de passage d'eau de forme cylindrique, à section circulaire, traversant la plaque adaptatrice de forme carrée, suivant un réseau à mailles carrées. La plaque de filtration comporte des ensembles d'ouvertures de petites dimensions qui viennent en coïncidence avec les trous de passage d'eau de la plaque adaptatrice, lorsque la plaque de filtration est mise en place contre la face inférieure de la plaque adaptatrice.

La disposition des ouvertures de passage d'eau suivant un réseau régulier ainsi que la disposition des trous de la plaque de filtration en coïncidence avec les ouvertures de passage d'eau, comme décrit dans la demande de brevet EP-A-0 392 919, permet d'obtenir un débit de passage d'eau dans les assemblages combustibles qui se maintient à une valeur acceptable pendant le fonctionnement du réacteur.

Néanmoins, il reste souhaitable de pouvoir augmenter sensiblement le débit du fluide primaire constitué par l'eau sous pression traversant la plaque adaptatrice des embouts inférieurs des assemblages combustibles.

Il est souhaitable également de faciliter l'usinage de la plaque adaptatrice et de limiter autant que possible les déformations de cette plaque, lorsque l'assemblage de l'embout est réalisé par soudage.

Le but de l'invention est donc de proposer un embout inférieur d'un assemblage combustible pour réacteur nucléaire comportant une plaque adaptatrice de forme carrée traversée par des ouvertures de passage d'eau et un moyen de filtration constitué par une plaque percée de trous de faibles dimensions accolée à la plaque adaptatrice, cet embout permettant d'accroître sensiblement le débit du fluide primaire pénétrant dans l'assemblage combustible, la plaque adaptatrice étant en outre conçue de manière à pouvoir être usinée facilement et éventuellement soudée, lors de l'assemblage de l'embout, sans subir de déformation de direction privilégiée.

Dans ce but, les ouvertures de passage d'eau de la plaque adaptatrice sont disposées de manière totalement symétrique, par rapport aux médianes et aux diagonales de la plaque adaptatrice, l'ensemble des ouvertures de chacune des sones de la plaque adaptatrice délimitées par une médiane et une diagonale comporte des ouvertures ayant une section transversale de forme oblongue et éventuellement des ouvertures de passage d'eau d'une autre forme et la plaque de filtration comporte des ensembles de trous disposés dans des zones de cette plaque venant en coïncidence avec les ouvertures oblongues de la plaque adaptatrice.

Dans un mode de réalisation préférentiel, chacune des sones de la plaque adaptatrice délimitées par une médiane et une diagonale comporte non seulement des ouvertures de forme oblongue mais également des ouvertures de forme cylindrique à section circulaire également disposées de manière totalement symétrique, par rapport aux médianes et aux diagonales de la plaque adaptatrice.

Afin de bien faire comprendre l'invention, on va maintenant décrire, à titre d'exemple non limitatif, en se référant aux figures jointes en annexe, un embout inférieur d'un assemblage combustible pour réacteur nucléaire à eau sous pression, suivant l'invention.

La figure 1 est une vue de dessus d'un embout suivant l'invention non équipé de sa plaque de filtration.

La figure 2 est une vue de dessus de l'embout suivant l'invention représenté sur la figure 1 équipé de sa plaque de filtration.

La figure 3 est une vue analogue à la vue de la figure 1 relative à une première variante de réalisation de la plaque adaptatrice.

La figure 4 est une vue analogue à la vue de la figure 2 relative à une seconde variante de réalisation de la plaque adaptatrice.

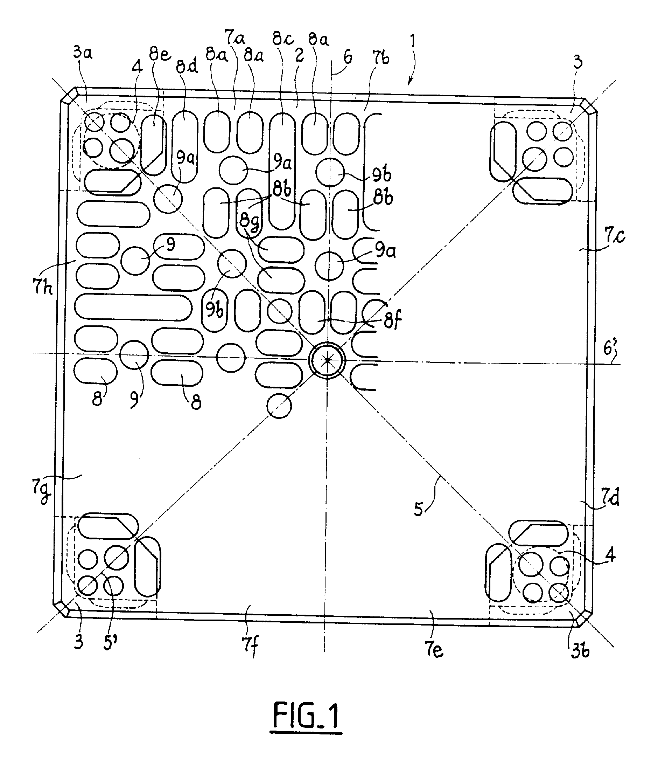

Sur la figure 1, on voit un embout inférieur d'un assemblage combustible pour réacteur nucléaire à eau sous pression désigné de manière générale par le repère 1 et constitué par une plaque adaptatrice 2 de forme carrée reposant sur des pieds supports 3 soudés sur la face inférieure de la plaque adaptatrice 2. La plaque adaptatrice 2 est constituée par une plaque métallique d'une épaisseur de l'ordre de 20 mm, chanfreinée sur son bord supérieur externe et traversée par des ouvertures de passage d'eau placées dans une disposition régulière, comme il sera expliqué plus loin.

De manière générale, les ouvertures de passage d'eau et les crayons de l'assemblage sont placés dans des positions relatives telles qu'un crayon de l'assemblage ne se trouve jamais complétement à l'aplomb d'une ouverture de passage d'eau. Ainsi, les crayons sont toujours maintenus à l'intérieur de l'assemblage par une partie de l'embout assurant leur retenue.

Les pieds supports 3 sont disposés suivant les quatre angles de la plaque adaptatrice 2.

Deux des pieds supports 3a et 3b qui sont placés suivant une diagonale 5 de la plaque adaptatrice 2 comportent des trous cylindriques 4 destinés à venir s'engager sur des broches solidaires de la plaque inférieure de coeur sur laquelle l'embout inférieur 1 vient reposer, lors de la mise en place de l'assemblage.

Les deux pieds supports situés sur la seconde diagonale 5′ de la plaque adaptatrice 2 ne comportent pas de trous analogues aux trous 4 des pieds supports 3a et 3b.

On a également représenté sur la figure 1 les deux médianes 6 et 6′ de la plaque adaptatrice qui constituent avec les diagonales 5 et 5′ des axes de symétrie par rapport auxquels les ouvertures de passage d'eau traversant la plaque adaptatrice 2 sont disposées d'une manière totalement symétrique, comme il sera décrit ci-après.

Pour décrire la disposition des ouvertures traversant la plaque adaptatrice 2, on considèrera les huit secteurs 7a, 7b, 7c, 7d, 7e, 7f, 7g et 7h de la surface de cette plaque délimités par les diagonales 5 et 5′ et par les médianes 6 et 6′. Les huit secteurs 7a à 7h se présentent sous la forme de triangles-rectangles identiques ayant un sommet commun constitué par le centre de la plaque 2.

Les ouvertures traversant la plaque adaptatrice 2 ont une forme, des dimensions et une disposition identiques dans chacun des secteurs triangulaires 7a à 7h. En conséquence, chacune des ouvertures traversant la plaque adaptatrice 2 est symétrique d'une ouverture identique, à la fois par rapport à une médiane et par rapport à une diagonale de la plaque adaptatrice. L'ensemble des ouvertures traversant la plaque 2 est donc disposé de manière totalement symétrique par rapport aux diagonales et par rapport aux médianes de la plaque adaptatrice.

De plus, une partie des ouvertures de passage d'eau traversant la plaque adaptatrice au niveau de chacun des secteurs triangulaires 7a à 7h présente une section droite de forme oblongue, plus ou moins allongée suivant l'axe longitudinal de la section droite.

Ces ouvertures ayant une section de forme oblongue seront désignées de manière générale par le repère 8.

Dans le cas du mode de réalisation préférentiel représenté sur la figure 1, la plaque adaptatrice 2 est traversée par douze ouvertures de passage d'eau de forme oblongue, dans chacun des secteurs triangulaires 7a à 7h.

La disposition, la forme et la dimension des ouvertures étant identiques dans chacun des secteurs triangulaires délimités par les diagonales et par les médianes de la plaque 2, on décrira uniquement ci-après la disposition des ouvertures à l'intérieur du secteur 7a.

A l'intérieur du secteur 7a, la plaque adaptatrice 2 est traversée par dix ouvertures oblongues dont l'axe est parallèle à la médiane 6 de la plaque adaptatrice 2 constituant l'un des côtés du secteur triangulaire 7a.

Ces dix ouvertures oblongues sont disposées de la manière suivante :
- trois ouvertures 8a de faible longueur sont alignées le long du bord externe de la plaque délimitant le secteur 7a ;
- trois ouvertures oblongues 8b dont la longueur est légèrement supérieure à la longueur des ouvertures 8a sont alignées suivant une seconde rangée parallèle à la rangée des ouvertures 8a et disposée vers l'intérieur de la plaque adaptatrice 2, c'est-à-dire dans une disposition plus proche de son centre que la rangée des ouvertures 8a ;
- une ouverture 8c de grande longueur est intercalée entre deux ouvertures 8a et deux ouvertures 8b et s'étend dans l'espace séparant la rangée des ouvertures 8a de la rangée des ouvertures 8b ;
- une ouverture 8d dont la longueur est intermédiaire entre la longueur d'une ouverture 8b et la longueur d'une ouverture 8c est placée à l'extrémité extérieure de la rangée d'ouvertures 8a et s'étend dans l'espace séparant les rangées d'ouvertures 8a et 8b ;
- une ouverture 8e dont la longueur est inférieure à la longueur de l'ouverture 8d est disposée à la suite de cette ouverture, vers l'extérieur de la rangée d'ouvertures 8a et 8d en direction de l'angle de la plaque 2 ;
- enfin, une ouverture 8f ayant une longueur sensiblement égale à la longueur des ouvertures 8a est placée au voisinage du centre de la plaque 2.

L'ensemble des ouvertures oblongues 8 disposées dans le secteur triangulaire 7a comporte également deux ouvertures 8g dont la longueur est sensiblement identique à la longueur des ouvertures 8a et 8f. Les deux ouvertures 8g présentent des axes longitudinaux parallèles à la médiane 6′ de la plaque adaptatrice 2 ou encore au côté extérieur de la plaque adaptatrice 2 délimitant le secteur 7a. Les ouvertures 8g sont intercalées entre la rangée d'ouvertures 8b et l'ouverture 8f.

En plus des douze ouvertures de forme oblongue, la plaque adaptatrice comporte, dans chacun des secteurs triangulaires 7a, neuf ouvertures cylindriques à section circulaire qui seront désignées de manière générale par le repère 9.

Ces ouvertures sont disposées de la manière suivante :
- cinq ouvertures sont centrées sur la diagonale 5 ;
- deux ouvertures sont centrées sur la médiane 6 ;
- et deux ouvertures sont disposées à l'intérieur du secteur triangulaire 7a.

Les deux ouvertures circulaires situées au voisinage de l'angle de la plaque 2, au-dessus du pied 3a, et situées pour l'une sur la diagonale 5 et pour l'autre à l'intérieur du secteur 7a, présentent un diamètre inférieur au diamètre des autres ouvertures.

Parmi ces autres ouvertures à plus grand diamètre, les trois ouvertures 9a dont l'une est située sur la diagonale 5, une autre sur la médiane 6 et la troisième à l'intérieur de la section triangulaire 7a, servent à l'engagement et à la fixation de l'extrémité de tubes-guides de l'assemblage. Deux ouvertures 9b, dont l'une est placée sur la diagonale 5 et l'autre sur la médiane 6 sont utilisées pour la fixation de la plaque de filtration sur la plaque adaptatrice par l'intermédiaire de rivets.

Les autres ouvertures de forme circulaire constituent des passages d'eau tels que les passages d'eau 8 de forme oblongue.

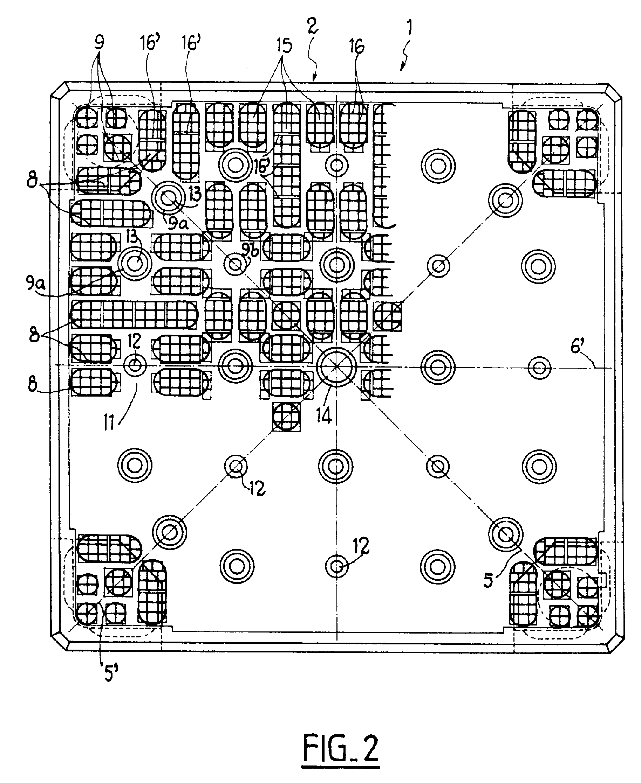

Sur la figure 2, on voit la plaque adaptatrice 2 telle que représentée sur la figure 1, sur la face supérieure de laquelle a été rapportée et fixée, dans une disposition accolée, une plaque de filtration 11 de faible épaisseur. Dans le cas d'un embout d'un assemblage pour réacteur nucléaire à eau sous pression dont la plaque adaptatrice présente un côté d'une longueur voisine de 20 cm et dont l'épaisseur est de l'ordre de 20 mm, on utilise une plaque de filtration dont l'épaisseur est voisine de 2 mm.

La plaque de filtration 11 est fixée sur la plaque adaptatrice 2, par l'intermédiaire de huit rivets 12 introduits chacun dans une ouverture 9b traversant la plaque adaptatrice 2.

Les seize tubes-guides 13 de l'assemblage sont fixés chacun dans une ouverture 9a de la plaque adaptatrice et traversent une ouverture correspondante de la plaque de filtration.

A la partie centrale de l'embout 1 est fixé un tube d'instrumentation 14, à l'intérieur d'une ouverture à section circulaire traversant la plaque adaptatrice et une ouverture correspondante de la plaque de filtration.

La plaque de filtration 11 comporte des ensembles 15 d'ouvertures de petites dimensions disposés suivant des réseaux à mailles carrées et venant se placer, lorsque la plaque 11 est accolée à la plaque adaptatrice 2, en coïncidence avec les ouvertures oblongues 8 de passage d'eau de la plaque adaptatrice et avec les ouvertures circulaires 9, à l'exception des ouvertures 9a et 9b utilisées pour la fixation des tubes-guides 13 et des rivets 12.

Chacun des ensembles de filtration 15 est constitué sous la forme d'un tamis à mailles carrées disposé dans une ouverture de forme rectangulaire ou de forme carrée traversant la plaque de filtration 11. Les tamis des ensembles 15 sont constituées par des fils ou des tiges 16 de faible section entrecroisés et fixés les uns aux autres.

Les tamis pourraient être également réalisées par poinçonnage de la plaque 11, de manière à délimiter les cellules des tamis par des ligaments constitués par le métal de la plaque 11.

Les mailles carrées des tamis 15 ont une dimension de l'ordre de 3 mm.

Les ensembles de filtration ou tamis 15 disposés en coïncidence avec les ouvertures de plus grandes dimensions de la plaque adaptatrice, telles que les ouvertures 8c, 8d et 8e peuvent comporter une ou plusieurs entretoises de renforcement 16′ de plus forte section que les fils ou ligaments 16 constituant le tamis 15. Les sections des fils ou ligaments constituant les tamis 15 présentent en effet des dimensions les plus faibles possibles, pour réduire la perte de charge, lors du passage de l'eau de refroidissement, et pour augmenter le débit de refroidissement de l'assemblage combustible. Les tamis 15 sont donc susceptibles de se déformer lors de l'arrêt de débris de masse importante, dans le cas des tamis superposés aux ouvertures de plus grande section, si bien que des entretoises 16′ peuvent être nécessaires pour obtenir une rigidité et une résistance suffisante des tamis 15.

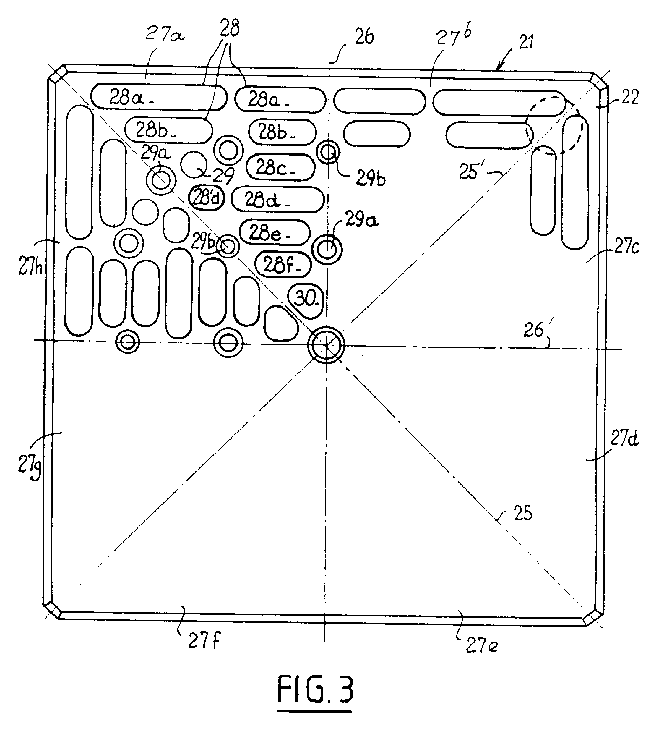

Sur la figure 3, on a représenté une première variante de réalisation de la plaque adaptatrice d'un embout suivant l'invention.

La plaque adaptatrice 22 de l'embout 21 comporte des ouvertures qui sont disposées de manière totalement symétrique par rapport aux diagonales 25 et 25′ et par rapport aux médianes 26 et 26′ de la plaque adaptatrice, comme dans le cas du mode de réalisation des figures 1 et 2.

Les diagonales et les médianes définissent, comme précédemment, huit secteurs triangulaires 27a, 27b, 27c, 27d, 27e, 27f, 27g et 27h dans lesquels les ouvertures de la plaque adaptatrice présentent des formes, des dimensions et des dispositions identiques.

On décrira les ouvertures traversant le secteur 27a de la plaque 22.

A l'intérieur du secteur 27a, la plaque est traversée par un ensemble d'ouvertures oblongues 28 et par des ouvertures à section circulaire 29.

L'ensemble des ouvertures oblongues comporte :
- deux ouvertures 28a de grande longueur disposées suivant une première rangée le long du bord de la plaque adaptatrice parallèle à la médiane 26′,
- deux ouvertures oblongues 28b de longueur plus faible que les ouvertures 28a disposées suivant une rangée parallèle à la médiane 26′, placée vers l'intérieur de la plaque adaptatrice par rapport à la rangée des ouvertures 28a,
- une ouverture 28c de longueur sensiblement identique à la longueur des ouvertures 28b alignée suivant une troisième rangée parallèle à la médiane 26′ avec une ouverture circulaire 29,
- une ouverture 28d et une ouverture 28′d de longueur inférieure à l'ouverture 28d disposées suivant une quatrième rangée,
- une ouverture 28e et une ouverture 28f parallèles à la médiane 26′ et placées l'une à la suite de l'autre en direction du centre de la plaque 22.

La plaque 22 comporte en plus des ouvertures oblongues 28 et de l'ouverture circulaire 29, une ouverture de passage d'eau 30 en forme de triangle à angles arrondis placée au voisinage du centre de la plaque 12.

Comme dans le cas du mode de réalisation des figures 1 et 2, les ouvertures circulaires 29a sont destinées à recevoir des tubes-guides de l'assemblage et les ouvertures circulaires 29b, des rivets de fixation d'une plaque de filtration qui est accolée à la plaque adaptatrice 22 et qui comporte des ouvertures de petite dimension venant se placer en coïncidence avec les ouvertures de passage d'eau 28 et 29.

Dans le mode de réalisation de la figure 3, les ouvertures oblongues ont toute la même direction parallèle à l'une des médianes de la plaque adaptatrice, à l'intérieur d'un secteur triangulaire. Cependant, pour l'ensemble de la plaque adaptatrice 22, les ouvertures oblongues disposées de manière symétrique se trouvent orientées dans les directions des deux médianes 26 et 26′.

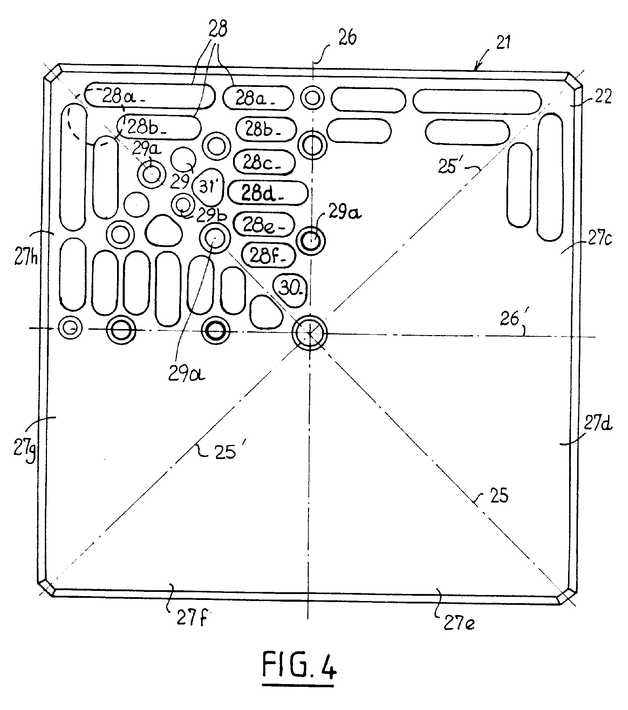

Sur la figure 4, on a représenté une seconde variante de réalisation d'une plaque adaptatrice d'un embout suivant l'invention.

Les éléments correspondants sur les figures 3 et 4 portent les mêmes repères. Les deux variantes diffèrent par le fait que l'ouverture oblongue 28′d de faible longueur est remplacée par une ouverture triangulaire à angles arrondis 31′, dans la seconde variante et que la plaque adaptatrice comporte vingt-quatre ouvertures 29a permettant la fixation de tubes-guides, au lieu de seize ouvertures comme dans le cas des modes de réalisation des figures 1, 2 et 3.

Dans le cas de la seconde variante, huit trous supplémentaires tels que 29b permettent la fixation d'une plaque de filtration par l'intermédiaire de rivets.

L'embout inférieur pour assemblage combustible suivant l'invention comportant une plaque adaptatrice traversée par des ouvertures de passage d'eau dont la forme et la disposition ont été décrites et une plaque de filtration superposée à la plaque adaptatrice comportant des ensembles d'ouvertures de filtration en coïncidence avec les ouvertures de passage d'eau de la plaque adaptatrice, présente l'avantage de permettre le passage d'un débit d'eau important dans l'assemblage combustible tout en assurant une filtration efficace de ce fluide. La disposition des lumières dans deux directions différentes et de manière symétrique permet à la plaque adaptatrice d'avoir une bonne résistance mécanique dans ces deux directions et évite ainsi une orientation préférentielle des déformations suivant l'un des axes. La rigidité de la plaque adaptatrice est identique dans les deux directions de la plaque adaptatrice, contrairement à ce qu'il en est lorsque les ouvertures sont disposées dans une seule direction. En outre, l'usinage de la plaque adaptatrice se trouve facilité et la plaque adaptatrice ne subit que des déformations faibles lors de son soudage pour constituer l'embout.

L'invention ne se limite pas au mode de réalisation qui a été décrit.

C'est ainsi que le nombre et la répartition des ouvertures oblongues de passage d'eau de la plaque adaptatrice peuvent être différents de ceux qui ont été indiqués ou décrits ci-dessus.

La plaque adaptatrice d'un embout suivant l'invention peut comporter uniquement des ouvertures de passage d'eau dont les sections sont de forme oblongue ou, au contraire, comme dans l'exemple de réalisation décrit, à la fois des ouvertures de passage d'eau ayant des sections de forme oblongue et des ouvertures de passage d'eau cylindrique à section circulaire

Enfin, l'invention s'applique non seulement dans le cas des assemblages combustibles pour réacteur nucléaire à eau sous pression mais également dans le cas des assemblages combustibles pour tout réacteur nucléaire refroidi à l'eau.

## Revendications

1. Embout inférieur d'un assemblage combustible pour réacteur nucléaire comportant une plaque adaptatrice (2) de forme carrée traversée par des ouvertures de passage d'eau (8, 9) et un moyen de filtration constitué par une plaque (11) percée de trous de faibles dimensions accolée à la plaque adaptatrice (2), les ouvertures de passage d'eau (8, 9) de la plaque adaptatrice étant disposées de manière totalement symétrique, par rapport aux médianes (6, 6′) et aux diagonales (5, 5′) de la plaque adaptatrice (2), l'ensemble des ouvertures de chacune des zones (7a, 7b, 7c, 7d, 7e, 7f, 7g, 7h) de la plaque adaptatrice (2) délimitées par une médiane (6, 6′) et une diagonale (5, 5′) comportant des ouvertures (8) ayant une section transversale de forme oblongue et éventuellement des ouvertures de passage d'eau d'une autre forme et la plaque de filtration (11) comportant des ensembles de trous (15) disposés dans des zones de cette plaque (11) venant en coïncidence avec les ouvertures oblongues (8) de la plaque adaptatrice.

2. Embout inférieur suivant la revendication 1, caractérisé par le fait que la plaque adaptatrice (2) comporte, en plus des ouvertures de passage d'eau (8) de forme oblongue, des ouvertures de passage d'eau (9) de forme cylindrique à section circulaire disposées de manière totalement symétrique par rapport aux médianes (6, 6′) et aux diagonales (5, 5′) de la plaque tubulaire.

3. Embout inférieur suivant l'une des revendications 1 et 2, caractérisé par le fait que la plaque adaptatrice (22) comporte en outre des ouvertures (30, 31) en forme de triangle à angles arrondis.

4. Embout inférieur suivant la revendication 1, caractérisé par le fait que, dans chacun des secteurs triangulaires (7a, ..., 7h), une partie des ouvertures (8) de forme oblongue présente une section dont l'axe longitudinal est dirigé suivant une direction parallèle à une première médiane (6, 6′) et l'autre partie, une section dont l'axe longitudinal est dirigé suivant une direction parallèle à une seconde médiane (6, 6′) de la plaque adaptatrice (2).

5. Embout suivant l'une quelconque des revendications 1 à 4, caractérisé par le fait que la plaque adaptatrice comporte, dans chacune des zones (7a, 7b, ... 7h) de forme triangulaire, des trous (9a) de fixation de tubes-guides de l'assemblage combustible sur l'embout inférieur et des trous (9b) de fixation de la plaque de filtration (11) sur la plaque adaptatrice (2), de forme cylindrique à section circulaire et disposés de manière totalement symétrique par rapport aux diagonales (5, 5′) et par rapport aux médianes (6, 6′) de la plaque adaptatrice (2).

6. Embout suivant l'une quelconque des revendications 1 à 5, caractérisé par le fait que les ouvertures (8, 28) de la plaque adaptatrice (2) ayant des sections de forme oblongue disposées à l'intérieur d'une zone (7a, ..., 7h ; 27a, ..., 27h) de forme triangulaire délimitée par une médiane (6, 6′, 26, 26′) et une diagonale (5, 5′, 25, 25′) de la plaque adaptatrice constituent des ensembles d'ouvertures (8a, 8b, 8c, 8d, 8e, 8f, 8g ; 28a, 28b,..., 28h) présentant des longueurs différentes dans leur direction axiale

7. Embout inférieur suivant la revendication 4, caractérisé par le fait que la plaque adaptatrice comporte, dans chacune des zones (7a, ..., 7h) de forme triangulaire, dix ouvertures oblongues (8a, 8b, 8c, 8d, 8e, 8f) dont l'axe longitudinal de la section est dirigé suivant une première direction parallèle à une première médiane (6) de la plaque adaptatrice (2) et deux ouvertures (8g) dont l'axe longitudinal de la section est dirigé dans une seconde direction parallèle à une seconde médiane (6′) de la plaque adaptatrice (2).

8. Embout suivant l'une quelconque des revendications 1 à 7, caractérisé par le fait que la plaque de filtration (11) comporte des ouvertures de forme rectangulaire ou carrée dans lesquelles sont disposés des ensembles de filtration (15) sous forme de tamis, superposés aux ouvertures de passage d'eau (8, 9) de la plaque adaptatrice (2).

9. Embout suivant la revendication 8, caractérisé par le fait que les tamis sont constitués par des fils ou ligaments (16) de faible section, dont une partie au moins comporte des entretoises de renforcement (16′) dont la section est plus importante que la section des fils ou ligaments délimitant les cellules des tamis (15).

## Patentansprüche

1. Fußstück einer Brennelementanordnung für einen Kernreaktor mit einer viereckigen Adapterplatte (2), die von Wasserdurchlaßöffnungen (8, 9) durchsetzt ist, und einer Filtereinrichtung, die aus einer mit der Adapterplatte (2) verbundenen Platte (11) besteht, welche von Löchern mit kleinen Abmessungen durchsetzt ist, wobei die Wasserdurchlaßöffnungen (8, 9) der Adapterplatte in bezug auf die Mittellinien (6, 6′) und die Diagonalen (5, 5′) der Adapterplatte (2) vollkommen symmetrisch angeordnet sind, wobei die Gesamtheit der Öffnungen jedes der durch eine Mittellinie (6, 6′) und eine Diagonale (6, 6′) begrenzten Bereiche (7a, 7b, 7c, 7d, 7e, 7f, 7g, 7h) der Adapterplatte (2) Öffnungen (8) mit einem länglichen Querschnitt und eventuell Wasserdurchlaßöffnungen mit einer anderen Form aufweist, und wobei die Filterplatte (11) Lochgruppen (15) aufweist, die in Bereichen dieser Platte (11) angeordnet sind, die mit den länglichen Öffnungen (8) der Adapterplatte fluchten.

2. Fußstück nach Anspruch 1, dadurch gekennzeichnet, daß die Adapterplatte (2), zusätzlich zu den länglichen Wasserdurchlaßöffnungen (8), zylindrische Wasserdurchlaßöffnungen (9) mit kreisförmigem Querschnitt aufweist, die in bezug auf die Mittellinien (6, 6′) und die Diagonalen (5, 5′) der Röhrchenplatte vollkommen symmetrisch angeordnet sind.

3. Fußstück nach einem der Ansprüche 1 oder 2, dadurch gekennzeichnet, daß die Adapterplatte (22) ferner Öffnungen (30, 31) in Form von Dreiecken mit abgerundeten Ecken aufweisen.

4. Fußstück nach Anspruch 1, dadurch gekennzeichnet, daß in jedem der dreieckigen Sektoren (7a, ..., 7h) ein Teil der länglichen Öffnungen (8) einen Querschnitt aufweist, dessen Längsachse parallel zu einer ersten Mittellinie (6, 6′) ausgerichtet ist, und der andere Teil einen Querschnitt aufweist, dessen Längsachse parallel zu einer zweiten Mittellinie (6, 6′) der Adapterplatte (2) ausgerichtet ist.

5. Fußstück nach einem der Ansprüche 1 bis 4, dadurch gekennzeichnet, daß die Adapterplatte in jedem der dreieckigen Bereiche (7a, 7b, ..., 7h) Löcher (9a) zur Befestigung von Führungsrohren der Brennelementanordnung an dem Fußstück und Löcher (9b) zur Befestigung der Filterplatte (11) an der Adapterplatte (2) aufweist, die von zylindrischer Form mit kreisförmigem Querschnitt sind und die in bezug auf die Mittellinien (6, 6′) und die Diagonalen (5, 5′) der Adapterplatte (2) vollkommen symmetrisch angeordnet sind.

6. Fußstück nach einem der Ansprüche 1 bis 5, dadurch gekennzeichnet, daß die Öffnungen (8, 28) der Adapterplatte (2), die einen länglichen Querschnitt aufweisen und innerhalb eines durch eine Mittellinie (6, 6′, 26, 26′) und eine Diagonale (5, 5′, 25, 25′) begrenzten Bereichs (7a, ..., 7h; 27a, ..., 27h) angeordnet sind, Gruppen von Öffnungen (8a, 8b, 8c, 8d, 8e, 8f, 8g; 28a, 28b, ..., 28h) mit in ihrer axialen Richtung unterschiedlichen Längen bilden.

7. Fußstück nach Anspruch 4, dadurch gekennzeichnet, daß die Adapterplatte in jedem der dreieckigen Bereiche (7a, ..., 7h) zehn längliche Öffnungen (8a, 8b, 8c, 8d, 8e, 8f), deren Querschnittslängsachse einer ersten Richtung parallel zu einer ersten Mittellinie (6) der Adapterplatte (2) folgt, und zwei Öffnungen (8g) aufweist, deren Querschnittslängsachse einer zweiten Richtung parallel zu einer zweiten Mittellinie (6′) der Adapterplatte (2) folgt.

8. Fußstück nach einem der Ansprüche 1 bis 7, dadurch gekennzeichnet, daß die Filterplatte (11) rechteckige oder quadratische Öffnungen aufweist, in denen Filtereinheiten (15) in Form von Sieben angeordnet sind, welche den Wasserdurchlaßöffnungen (8, 9) der Adapterplatte (2) überlagert sind.

9. Fußstück nach Anspruch 8, dadurch gekennzeichnet, daß die Siebe aus Fäden oder Ligamenten (16) mit kleinem Querschnitt bestehen, von denen wenigstens ein Teil Verstärkungszwischenstücke (16′) aufweist, deren Querschnitt größer ist als der Querschnitt der Fäden oder Ligamente, die die Zellen der Siebe (15) bilden.

## Claims

1. Lower connector of a fuel assembly for a nuclear reactor comprising an adaptor plate (2) of square shape, through which extend water passage orifices (8, 9) and filtration means constituted by a plate (11) pierced with holes of small dimensions and laid against the adaptor plate (2), the water passage orifices (8, 9) of the adaptor plate being arranged completely symmetrically in relation to the medians (6, 6′) and to the diagonals (5, 5′) of the adaptor plate (2), the set of orifices of each of the zones (7a, 7b, 7c, 7d, 7e, 7f, 7g, 7h) of the adaptor plate (2) delimited by a median (6, 6′) and a diagonal (5, 5′) comprising orifices (8) having a cross-section of oblong shape and, if appropriate, water passage orifices of another shape and the filtration plate (11) comprising sets of holes (15) arranged in zones of this plate (11) coming into coincidence with the oblong orifices (8) of the adaptor plate.

2. Lower connector according to Claim 1, characterised by the fact that the adaptor plate (2) comprises, in addition to the water passage orifices (8) of oblong shape, water passage orifices (9) of cylindrical shape and of circular cross-section, arranged completely symmetrically in relation to the medians (6, 6′) and to the diagonals (5, 5′) of the tubular plate.

3. Lower connector according to one of Claims 1 and 2, characterised by the fact that the adaptor plate (22) furthermore comprises orifices (30, 31) in the shape of a triangle with rounded angles.

4. Lower connector according to Claim 1, characterised by the fact that, in each of the triangular sectors (7a, ..., 7h), a part of the orifices (8) of oblong shape have a cross-section whereof the longitudinal axis points in a direction parallel to a first median (6, 6′) and the other part a cross-section whereof the longitudinal axis points in a direction parallel to a second median (6, 6′) of the adaptor plate (2).

5. Connector according to one of Claims 1 to 4, characterised by the fact that the adaptor plate comprises, in each of the zones (7a, 7b...7h) of triangular shape, holes (9a) for fastening guide tubes of the fuel assembly to the lower connector and holes (9b) for fastening the filtration plate (11) to the adaptor plate (2), which are of circular shape and of circular cross-section and which are arranged completely symmetrically in relation to the diagonals (5, 5′) and in relation to the medians (6, 6′) of the adaptor plate (2).

6. Connector according to one of Claims 1 to 5, characterised by the fact that the orifices (8, 28) of the adaptor plate (2) having cross-sections of oblong shape and arranged within a zone (7a,...., 7h; 27a,..., 27h) of triangular shape delimited by a median (6, 6′, 26, 26′) and a diagonal (5, 5′, 25, 25′) of the adaptor plate constitute sets of orifices (8a, 8b, 8c, 8d, 8e, 8f, 8g; 28a, 28b,..., 28h) having different lengths in their axial direction.

7. Lower connector according to Claim 4, characterised by the fact that the adaptor plate comprises, in each of the zones (7a,..., 7h) of triangular shape, ten oblong orifices (8a, 8b, 8c, 8d, 8e, 8f) whereof the longitudinal axis of the cross-section points in a first direction parallel to a first median (6) of the adaptor plate (2) and two orifices (8g) whereof the longitudinal axis of the cross-section points in a second direction parallel to a second median (6′) of the adaptor plate (2).

8. Connector according to one of Claims 1 to 7, characterised by the fact that the filtration plate (11) comprises orifices of rectangular or square shape, in which are arranged filtration sets (15) in the form of sieves, superimposed on the water passage orifices (8, 9) of the adaptor plate (2).

9. Connector according to Claim 8, characterised by the fact that the sieves are constituted by wires or ligaments (16) of small cross-section, whereof at least a part comprise reinforcing struts (16′), the cross-section of which is larger than the cross-section of the wires or ligaments delimiting the cells of the sieves (15).
